# EUROPEAN PATENT SPECIFICATION

(11) **EP 2 805 022 B1**
(45) Date of publication and mention of the grant of the patent: **07.11.2018**
(21) Application number: 12871724.6
(22) Date of filing: 30.12.2012
(51) Int. Cl.: F01D 9/00, F02K 3/075, F01D 9/04, F01D 17/10

(54) **Gas turbine bypass vane system, gas turbine engine and method for manufacturing a bypass vane stage**
Gasturbinen Bypass-Leitschaufelsystem, Gasturbine und Herstellungsverfahren einer Beipass-Leitschaufelstufe
Système d'une aube statorique d'une turbine à gaz à double flux, turbine à gaz, et méthode de fabrication d'un étage d'aubes statoriques à double flux

(30) Priority: 30.12.2011 US 201161581786 P
(43) Date of publication of application: 26.11.2014
(73) Proprietor: Rolls-Royce Corporation, Indianapolis, IN 46241 (US)
(72) Inventor: RIVERS, Jonathan, Michael, Indianapolis, IN 46236 (US); FULAYTER, Roy, David, Avon, IN 46123 (US)
(74) Representative: Dauncey, Mark Peter
(86) International application number: PCT/US2012/072232
(87) International publication number: WO 2013/141941

(56) References cited:
- US-A1- 2004 234 372
- US-A1- 2004 234 372
- US-A1- 2004 265 124
- US-A1- 2004 265 124
- US-A1- 2007 104 574
- US-A1- 2007 104 574
- US-A1- 2011 033 285
- US-A1- 2011 171 018
- US-A1- 2011 171 018
- US-A1- 2011 243 752
- US-B1- 6 196 794
- US-B1- 6 196 794
- US-B1- 6 554 564
- US-B1- 6 648 597

## Description

### Cross Reference to Related Applications

The present application claims benefit of U.S. Provisional Patent Application No. 61/581,786 filed December 30, 2011, entitled TURBINE ENGINE AND VANE SYSTEM,

### Field of the Invention

The present invention relates to turbine engines, and more particularly, to vane systems for turbine engines.

### Background

Vane systems for turbine engines that are cost effective and readily manufactured, such as bypass vane systems for turbofan engines, remain an area of interest. Some existing systems have various shortcomings, drawbacks, and disadvantages relative to certain applications. Accordingly, there remains a need for further contributions in this area of technology.

US 2011/0033285 discloses an assembly for a stator stage of a turbo machine comprising an outer and an inner shroud a plurality of vanes being defined by the same dimensions, the vanes being inserted between the outer and inner shroud in respective openings, whereby a first portion of the vanes includes a lip, which when received in a respective opening of the shroud, rests on a ledge disposed in the corresponding opening, and a top surface of the lip opposite the bottom surface of the lip does not extend outwardly beyond a top surface of the vane platform segment. US 6,196,794 B1 discloses a method for manufacturing composite gas turbine vanes, comprising: moulding a plurality of composite vanes, each vane being defined by the same dimensions and having a lip, forming a plurality of composite vane platform segments configured to jointly form a ring, the platform forming a plurality of openings, wherein each opening is formed to receive a portion of the vanes, the opening forming a ledge, wherein each vane is received in a corresponding one of the openings, wherein a bottom surface of the lip of each vane rests on the ledge disposed in the corresponding one of the openings, and a top surface of the lip opposite the bottom surface of the lip does not extend outwardly beyond a top surface of the vane platform segment.

### Summary

One embodiment of the present invention is a bypass vane system, according to claim 1. Another embodiment is a gas turbine engine, according to claim 6. Another embodiment is a method for manufacturing a bypass vane stage, according to claim 12. Other embodiments include apparatuses, systems, devices, hardware, methods, and combinations for turbine engines and vane systems for turbine engines. Further embodiments, forms, features, aspects, benefits, and advantages of the present application will become apparent from the description and figures provided herewith.

### Brief Description of the Drawings

The description herein makes reference to the accompanying drawings wherein like reference numerals refer to like parts throughout the several views, and wherein:
FIG. 1 schematically illustrates some aspects of a non-limiting example of a gas turbine engine in accordance with an embodiment of the present invention.
FIG. 2 illustrates some aspects of a non-limiting example of a bypass vane doublet in accordance with an embodiment of the present invention.
FIG. 3 illustrates some aspects of a non-limiting example of a bypass vane in accordance with an embodiment of the present invention.
FIGS. 4A-4D illustrate some aspects of non-limiting examples of vane platform segments in accordance with an embodiment of the present invention.
FIGS. 5A and 5B illustrate some aspects of non-limiting examples of vane platform segments in accordance with embodiments of the present invention.
FIG. 6 schematically illustrates some aspects of a non-limiting example of a vane platform in accordance with an embodiment of the present invention.

### Detailed Description

For purposes of promoting an understanding of the principles of the invention, reference will now be made to the embodiments illustrated in the drawings, and specific language will be used to describe the same. It will nonetheless be understood that no limitation of the scope of the invention is intended by the illustration and description of certain embodiments of the invention. In addition, any alterations and/or modifications of the illustrated and/or described embodiment(s) are contemplated as being within the scope of the present invention. Further, any other applications of the principles of the invention, as illustrated and/or described herein, as would normally occur to one skilled in the art to which the invention pertains, are contemplated as being within the scope of the present invention.

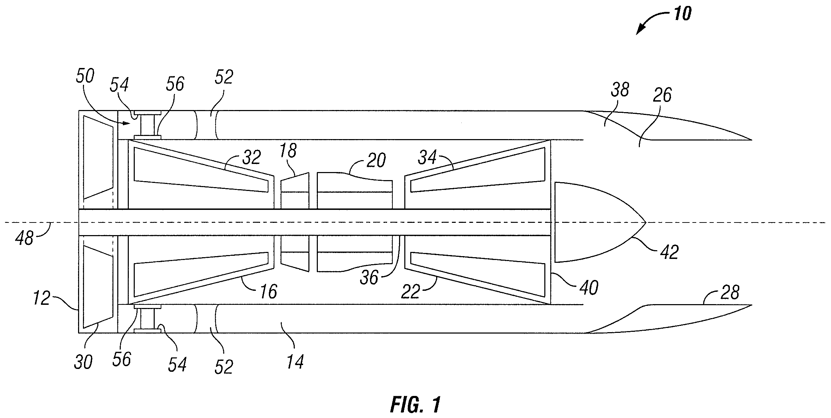

Referring to the drawings, and in particular FIG. 1, a non-limiting example of some aspects of a gas turbine engine 10 in accordance with an embodiment of the present invention is schematically depicted. In one form, gas turbine engine 10 is an aircraft propulsion power plant. In other embodiments, gas turbine engine 10 may be a land-based or marine engine. In one form, gas turbine engine 10 is a multi-spool turbofan engine. In other embodiments, gas turbine engine 10 may take other forms, and may be, for example, a turboshaft engine, a turbojet engine, a turboprop engine, or a combined cycle engine having a single spool or multiple spools.

As a turbofan engine, gas turbine engine 10 includes a fan 12, a bypass duct 14, a compressor 16, a diffuser 18, a combustor 20, a turbine 22, a discharge duct 26 and a nozzle system 28. Bypass duct 14 and compressor 16 are in fluid communication with fan system 12. Diffuser 18 is in fluid communication with compressor 16. Combustor 20 is fluidly disposed between compressor 16 and turbine 22. In one form, combustor 20 includes an annular combustion liner (not shown in FIG. 1) that contains a continuous combustion process. In other embodiments, combustor 20 may take other forms, and may be, for example and without limitation, a can combustor or a can-annular combustor. In still other embodiments, combustor 20 may be a deflagration combustion system and/or a detonation combustion system.

Fan 12 includes a fan rotor system 30 having a plurality of blades. In various embodiments, fan rotor system 30 includes one or more rotors (not shown) that are powered by turbine 22. Bypass duct 14 is operative to transmit a bypass flow generated by fan system 12 to nozzle 28. Compressor 16 includes a compressor rotor system 32. In various embodiments, compressor rotor system 32 includes one or more rotors (not shown) that are powered by turbine 22. Each compressor rotor includes a plurality of rows compressor blades (not shown) that are alternatingly interspersed with rows of compressor vanes (not shown). Turbine 22 includes a turbine rotor system 34. In various embodiments, turbine rotor system 34 includes one or more rotors (not shown) operative to drive fan rotor system 30 and compressor rotor system 32. Each turbine rotor includes a plurality of turbine blades (not shown) that are alternatingly interspersed with rows of turbine vanes (not shown).

Turbine rotor system 34 is drivingly coupled to compressor rotor system 32 and fan rotor system 30 via a shafting system 36. In various embodiments, shafting system 36 includes a plurality of shafts that may rotate at the same or different speeds and directions. In some embodiments, only a single shaft may be employed. Turbine 22 is operative to discharge an engine 10 core flow to nozzle 28.

In one form, fan rotor system 30, compressor rotor system 32, turbine rotor system 34 and shafting system 36 rotate about an engine centerline 48. In other embodiments, all or parts of fan rotor system 30, compressor rotor system 32, turbine rotor system 34 and shafting system 36 may rotate about one or more other axes of rotation in addition to or in place of engine centerline 48.

Discharge duct 26 extends between a discharge portion 40 of turbine 22 and engine nozzle 28. Discharge duct 26 is operative to direct bypass flow and core flow from a bypass duct discharge portion 38 and turbine discharge portion 40, respectively, into nozzle 28. In some embodiments, discharge duct 26 may be considered a part of nozzle 28. Nozzle 28 is in fluid communication with fan system 12 and turbine 22. Nozzle 28 is operative to receive the bypass flow from fan system 12 via bypass duct 14, and to receive the core flow from turbine 22, and to discharge both as an engine exhaust flow, e.g., a thrust-producing flow. In other embodiments, other nozzle arrangements may be employed, including separate nozzles for each of the core flow and the bypass flow.

During the operation of gas turbine engine 10, air is drawn into the inlet of fan 12 and pressurized by fan 12. Some of the air pressurized by fan 12 is directed into compressor 16 as core flow, and some of the pressurized air is directed into bypass duct 14 as bypass flow, which is discharged into nozzle 28 via discharge duct 26. Compressor 16 further pressurizes the portion of the air received therein from fan 12, which is then discharged into diffuser 18. Diffuser 18 reduces the velocity of the pressurized air, and directs the diffused core airflow into combustor 20. Fuel is mixed with the pressurized air in combustor 20, which is then combusted. The hot gases exiting combustor 20 are directed into turbine 22, which extracts energy in the form of mechanical shaft power sufficient to drive fan 12 and compressor 16 via shafting system 36. The core flow exiting turbine 22 is directed along an engine tail cone 42 and into discharge duct 26, along with the bypass flow from bypass duct 14. Discharge duct 26 is configured to receive the bypass flow and the core flow, and to discharge both into nozzle 28 as an engine exhaust flow, e.g., for providing thrust, such as for aircraft propulsion.

Disposed within bypass duct 14 is a bypass vane stage 50 and a plurality of struts 52. In one form, bypass vane stage 50 is disposed proximate to fan blade stage 12, and is operative to direct air from fan 12. In other embodiments, bypass vane stage 50 may be disposed to direct air into fan 12 blades. In one form, struts 52 are located downstream of vane stage 50. In other embodiments, struts 52 may be located upstream of vane stage 50 in addition to or in place of being located downstream of vane stage 50. Bypass vane stage 50 is configured to straighten the pressurized air flow generated by fan 12 and to direct it into bypass duct 14. In one form, struts 52 are configured to transmit engine 10 loads from engine 10 to the aircraft into which engine 10 is installed, e.g., into nacelle and/or wing structures. In other embodiments, struts 52 may not be configured to transmit engine 10 loads to the aircraft.

In one form, bypass vane stage 50 includes a circumferential tip platform 54, a circumferential hub platform 56 spaced radially inward of circumferential tip platform 54, and a plurality of bypass vanes 58. Circumferential tip platform 54 and circumferential hub platform 56 each include a plurality of openings. In one form, the openings correspond in number to the number bypass vanes 58, and are configured to receive respective portions of the vanes. In other embodiments, the number of openings may be different, e.g., depending upon the construction of vanes 58. In one form, vanes 58 are mounted in the openings and disposed between and attached to circumferential tip platform 54 and circumferential hub platform 56. Circumferential tip platform 54 and circumferential hub platform 56 are configured to support respective portions of each of the vanes. In one form, vane stage 50 is formed of a composite material, including circumferential tip platform 54, circumferential hub platform 56 and bypass vanes 58. In one form, the composite material is carbon fiber with an epoxy resin system. In other embodiments, other composite materials may be employed in addition to or in place of carbon fiber with an epoxy resin system, for example and without limitation, carbon fiber and/or another fiber type with a bismaleimide (BMI) and/or polyimide in addition to or in place of an epoxy resin system. In still other embodiments, still other composite materials may be employed in addition to or in place of those mentioned herein above. In various embodiments, one or more components of vane stage 50, e.g., circumferential tip platform 54, circumferential hub platform 56 and/or bypass vanes 58 may be formed from one or more other materials, e.g., metallic, intermetallic, matrix composite and/or other materials in addition to or in place of the composite materials mentioned herein. In one form, each bypass vane 58 is defined by the same dimensions. In other embodiments, bypass vanes 58 may not be defined by the same dimensions.

In one form, bypass vane stage 50 is formed of a plurality of vane doublets, each doublet having two vanes 58, a tip platform segment and a hub platform segment. The plurality of vane platform segments, tip and hub, are configured to jointly form circumferential tip platform 54 and circumferential hub platform 56 in the form of two rings, which along with vanes 58 form bypass vane stage 50. In some embodiments, additional components may be employed, e.g., straps attached to the platform segments and vanes to additionally secure the vanes to the platform segments. Although vane doublets are employed in the present embodiment, it will be understood that singlets, triplets, or vane ring segments having any number of vanes may be employed in other embodiments.

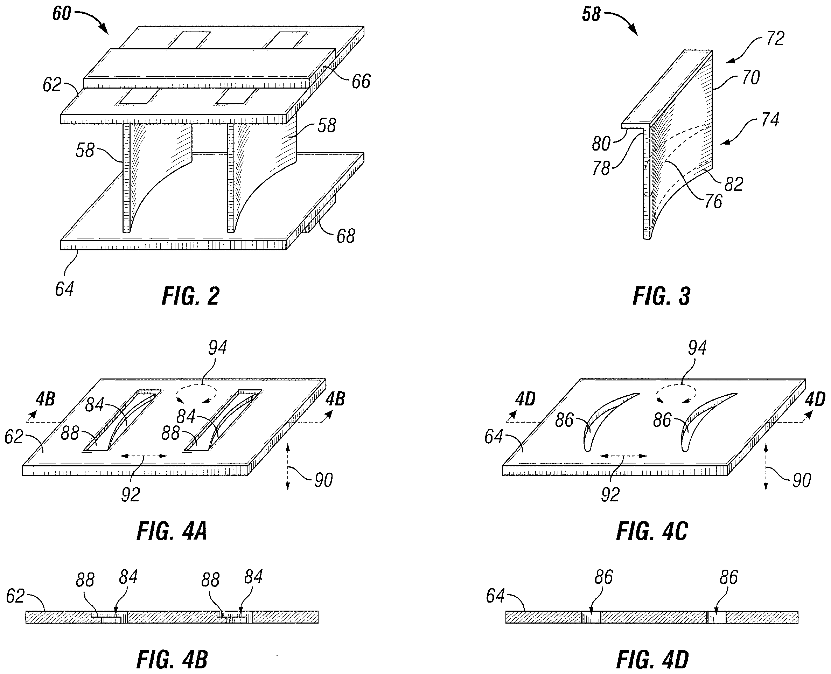

Referring to FIG. 2, some aspects of a non-limiting example of a vane ring segment in the form of a vane doublet 60 are illustrated in accordance with an embodiment of the present invention. Doublet 60 includes two vanes 58, a vane tip platform segment 62, a vane hub platform segment 64, a tip strap 66 and a hub strap 68. In one form, vanes 58 are formed via a molding process, and each vane 58 is formed to the same dimensions. In other embodiments, other processes may be employed to form vanes 58; and vanes 58 may or may not be formed to the same dimensions. In one form, vane tip platform segment 62 and vane hub platform segment 64 are also formed via a molding process. In other embodiments, other processes may be employed to form vane tip platform segment 62 and vane hub platform segment 64. Vane tip platform segments 62 and vane hub platform segments 64 are configured to be jointly assembled to form rings, which support and position vanes 58, and which yield circumferential tip platform 54 and circumferential hub platform 56. Formed into vane tip platform segment 62 and vane hub platform segment 64 are openings configured to receive respective tip and hub portions of vanes 58 and position vanes 58 within doublet 60 and hence vane stage 50. Vanes 58 are inserted into the openings in vane tip platform segment 62 and vane hub platform segment 64. Some of the openings vary in position relative to others of the openings so as to preferentially locate vanes 58 at desired locations and setting angles, e.g., to modify airflow through vane stage 50 to accommodate struts 52, e.g., to direct airflow around struts 52 in order to minimize losses owing to the presence of struts 52. Hence, in some embodiments, vane 58 locations, e.g., circumferential locations, and setting angles vary as between vanes 58.

In one form, vanes 58 are fastened into place in vane tip platform segment 62 and vane hub platform segment 64 using an adhesive. In one form, the adhesive is a paste adhesive. In other embodiments, combinations of paste adhesives, film adhesives and/or foaming adhesives may be employed. Non-limiting examples of paste adhesives include, for example, EC_2615 and EC_3448, available from the 3M Corporation of St. Paul, Minnesota, U.S.A. In other embodiments, other joinery techniques may be employed to attach vanes 58 to vane tip platform segment 62 and vane hub platform segment 64. In one form, tip and hub straps 66 and 68 are fastened to the ends of vanes 58, and to vane tip platform segment 62 and vane hub platform segment 64, respectively using the paste adhesive, to further secure vanes 58 into vane tip platform segment 62 and vane hub platform segment 64. In other embodiments, other joinery techniques may be employed to further secure tip and hub straps 66 and 68 to vanes 58 and vane tip platform segment 62 and vane hub platform segment 64.

Referring to FIG. 3, some aspects of a non-limiting example of a vane 58 are depicted in accordance with an embodiment of the present invention. Vane 58 includes an airfoil body 70, a tip portion 72 and a hub portion 74. In one form, vane 58 has an airfoil shape 76, indicated by dashed lines, which may or may not vary as between tip portion 72 and hub portion 74, depending upon the needs of the particular application. In other embodiments, all or a portion of vane 58 may not include an airfoil shape. Tip portion 72 includes an extension 78 having a lip 80 extending therefrom. In one form, lip 80 extends at a right angle relative to the balance of extension 78. In other embodiments, lip 80 may be formed as another shape. Hub portion 74 includes an extension 82. In one form, extensions 78 and 82 are defined by airfoil shape 76. In other embodiments, one or both of extensions 78 and 82 may have other shapes. Extensions 78 and 82 are configured to be received into openings in vane tip platform segment 62 and vane hub platform segment 64.

Referring to FIGS. 4A-4D, some aspects of non-limiting examples of vane tip platform segment 62 and vane hub platform segment 64 are depicted in accordance with an embodiment of the present invention. FIGS. 4A and 4B depict top and sectional views, respectively, of vane tip platform segment 62, whereas FIGS. 4C and 4D depict top and sectional views, respectively, of vane hub platform segment 64. Vane tip platform segment 62 includes openings 84. Vane hub platform segment 64 includes openings 86. Openings 84 and 86 are configured to position vanes 58 within doublet 60 and vane stage 50. In one form, openings 84 and 86 have the same airfoil cross-sectional shape 76 as body 70 of vane 58, i.e., the shape of extensions 78 and 82 (and lip 90 for embodiments so equipped). In other embodiments, openings 84 and 86 may take other forms. Each opening 84 is configured to receive a tip portion 72 of a vane 58, in particular, extension 78 and lip 80. Lip 80 is configured to retain vane 58 with vane tip platform segment 62. Openings 84 include a ledge 88. Ledge 88 is configured to function as a mating surface for the bottom of lip 80 to retain each vane 58 in vane tip platform segment 62. Each opening 86 is configured to receive a hub portion 74 of a vane 58, in particular, extension 82. In one form, vanes 58 are inserted into openings 84 and 86, in particular, extension 78 and lip 80, and extension 82, and are fastened into place using the paste adhesive, and tip and hub straps 66 and 68 are fastened to the ends of vanes 58, and to vane tip platform segment 62 and vane hub platform segment 64 using the paste adhesive, forming doublets 60.

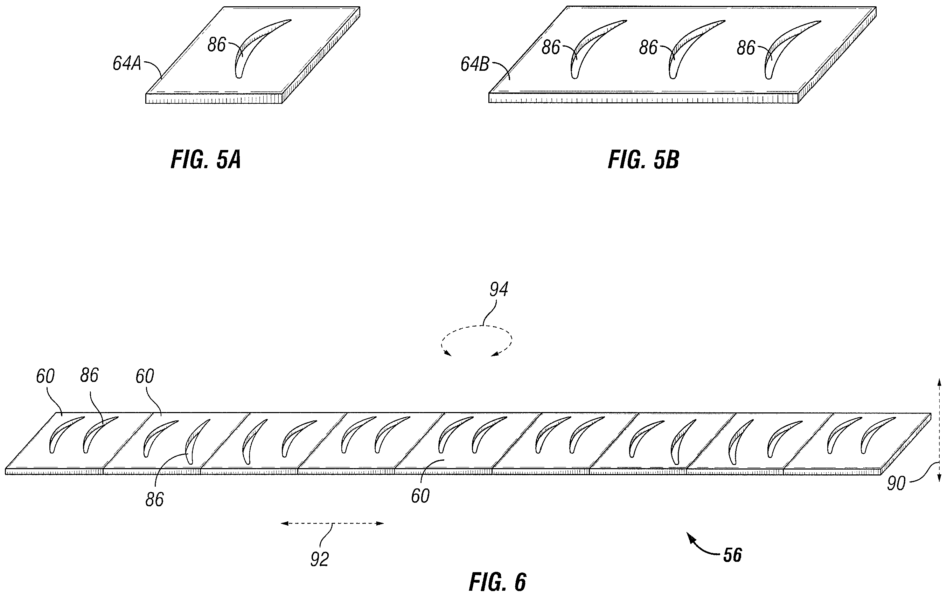

The number of openings 84 and 86 in vane tip platform segment 62 and vane hub platform segment 64 may vary in different embodiments. For example, in vane ring segments in the form of doublet 60, the number of openings 84 and 86 in vane tip platform segment 62 and vane hub platform segment 64 is sufficient to accommodate two vanes 58 in doublet 60. For vane ring segments in the forms of singlets or triplets, the number of openings 84 and 86 in vane tip platform segment 62 and vane hub platform segment 64 is sufficient to accommodate a single vane 58 or three vanes 58, respectively, e.g., as depicted in FIGS. 5A and 5B with vane hub platform segments 64A and 64B, respectively. The number of openings 84 and 86 in vane tip platform segment 62 and vane hub platform segment 64, and the number of vanes 58 in each vane ring segment may vary with the needs of the application. The combined number of openings in each of the vane tip platform segments 62 and vane hub platform segments 64 used to form vane stage 50 is selected to be sufficient to accommodate the total number of vanes 58 employed in vane stage 50. Openings 84 and 86 are formed to vary in one or more of an axial direction 90, a circumferential direction 92 and a setting angle direction 94, so that the position of some openings 84 and 86 vary in one or more of axial direction 90, circumferential direction 92 and setting angle direction 94, relative to other openings 84 and 86. In one form, the positions of openings 84 and 86 vary cyclically (in one or more of axial direction 90, circumferential direction 92 and setting angle direction 94) along circumferential direction 92, e.g., in order to mitigate the effects of struts 52 on bypass airflow, as schematically depicted in FIG. 6, which schematically illustrates a plurality of openings 86 in circumferential hub platform 56 formed of a plurality of vane hub platform segments 64. It will be understood that the variation as between openings 86 illustrated in FIG. 6, which includes variation in axial direction 90, circumferential direction 92 and setting angle direction 94, is by way of example only, and that the actual variation between openings 86 (and between openings 84), which drives the variation between vanes 58, may vary with the needs of the particular application.

Embodiments of the present invention include a vane system for a gas turbine engine, comprising: a plurality of vanes, each vane being defined by the same dimensions, wherein each vane includes a first portion and a second portion; a first circumferential vane platform having a plurality of openings corresponding in number to the plurality of vanes, wherein each opening is configured to receive the first portion of one of the vanes; a second circumferential vane platform spaced radially apart from the first circumferential vane platform, wherein the second circumferential vane platform is configured to support the second portion of each of the vanes, wherein some of the plurality of openings vary in position relative to others of the plurality of openings.

In a refinement, the some of the plurality of openings vary in an axial direction relative to the others of the plurality of openings.

In another refinement, the some of the plurality of openings vary in a circumferential direction relative to the others of the plurality of openings.

In yet another refinement, the some of the plurality of openings vary in a setting angle direction relative to the others of the plurality of openings.

In still another refinement, the some of the plurality of openings vary cyclically in a circumferential direction relative to the others of the plurality of openings.

In yet still another refinement, the first circumferential vane platform is a ring formed of a plurality of platform segments, each segment including one of the openings.

In a further refinement, the first circumferential vane platform is a ring formed of a plurality of platform segments, each segment including two of the openings.

In a yet further refinement, the first circumferential vane platform is a ring formed of a plurality of platform segments, each segment including three of the openings.

In a still further refinement, the plurality of vanes are formed of a composite material.

In a yet still further refinement, each vane has a same cross-sectional shape, and wherein each opening has the same cross-sectional shape as each vane.

Embodiments of the present invention include a gas turbine engine, comprising: a fan blade stage; and a bypass vane stage disposed proximate to the fan blade stage and operative to direct air to or from the fan blade stage, wherein the bypass vane stage includes: a plurality of composite vanes, each vane being defined by the same dimensions; and a plurality of composite vane platform segments having a combined plurality of openings, wherein each vane platform segment includes at least one of the openings; wherein each opening is configured to receive a portion of one of the vanes and to position the one of the vanes within the bypass vane stage; wherein the plurality of vane platform segments are configured to jointly form a ring to form at least part of the bypass vane stage in conjunction with the vanes positioned by the openings; and wherein at least some of the openings vary in position relative to others of the openings.

In a refinement, each vane platform segment includes at least two of the openings.

In another refinement, each vane platform segment includes at least three of the openings.

In yet another refinement, each vane includes an extension configured to be received in one of the openings.

In still another refinement, the extension includes a lip configured to retain the vane with one of the vane platform segments.

In yet still another refinement, the extension has an airfoil shape, and wherein each opening has the same airfoil shape as the extension.

Embodiments of the present invention include a method of manufacturing a bypass vane stage, comprising: molding a plurality of composite vanes, each vane being defined by the same dimensions; forming a plurality of composite vane platform segments configured to jointly form a ring; forming a plurality of openings in the plurality of composite vane platform segments, wherein each vane platform segment includes at least one opening; and wherein each opening is formed to receive a portion of one of the vanes and to position the one of the vanes within the bypass vane stage; and wherein at least some of the openings are formed to vary in position relative to others of the openings.

In a refinement, the at least some of the openings are formed to vary in one or more of an axial direction, a circumferential direction and a setting angle direction relative to the others of the openings.

In another refinement, the method further comprises forming an extension in each vane configured to be received in one of the openings.

In yet another refinement, the method further comprises forming a lip on the extension, wherein the lip is configured to retain the vane with one of the vane platform segments.

In still another refinement, the method further comprises: inserting one of the vanes into one of the openings; fastening the vane to one of the vane platform segments using a paste adhesive; and fastening a strap to the vane platform segment and an extension of the vane using the paste adhesive.

While the invention has been described in connection with what is presently considered to be the most practical and preferred embodiment, it is to be understood that the invention is not to be limited to the disclosed embodiment(s), but on the contrary, is intended to cover various modifications and equivalent arrangements included within the scope of the appended claims, which scope is to be accorded the broadest interpretation so as to encompass all such modifications and equivalent structures as permitted under the law. Furthermore it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. A bypass vane system for a gas turbine engine, comprising:
a plurality of vanes (58), each vane being defined by the same dimensions, wherein each vane includes a first portion (72) and a second portion (74);
a first circumferential vane platform (54) having a plurality of openings (84) corresponding in number to the plurality of vanes, wherein each opening is configured to receive the first portion of one of the vanes, the first circumferential vane platform including a vane platform segment (62) defining at least one of said plurality of openings; and
a second circumferential vane platform (56) spaced radially apart from the first circumferential vane platform, wherein the second circumferential vane platform is configured to support the second portion of each of the vanes, wherein,
some of the plurality of openings vary in position relative to others of the plurality of openings;
the first portion of each vane includes a lip (80) extending therefrom; and
a ledge (88) disposed in each opening;
wherein when each vane is received in a corresponding one of the openings, a bottom surface of the lip of such vane rests on the ledge disposed in the corresponding one of the openings, and a top surface of the lip opposite the bottom surface of the lip does not extend outwardly beyond a top surface of the vane platform segment.

2. The vane system of claim 1, wherein:
(i) the some of the plurality of openings (84) vary in an axial direction relative to the others of the plurality of openings; or
(ii) the some of the plurality of openings (84) vary in a circumferential direction relative to the others of the plurality of openings; or
(iii) the some of the plurality of openings (84) vary in a setting angle direction relative to the others of the plurality of openings; or
(iv) the some of the plurality of openings (84) vary cyclically in a circumferential direction relative to the others of the plurality of openings; or
(v) the first circumferential vane platform (54) is a ring formed of a plurality of said platform segments (62), each segment including one of the openings (84); or
(vi) the first circumferential vane platform (54) is a ring formed of a plurality of said platform segments (62), each segment including two of the openings (84).

3. The vane system of claim 1, wherein the first circumferential vane platform (54) is a ring formed of a plurality of said platform segments (62), each segment including three of the openings (84).

4. The vane system of claim 1, wherein the plurality of vanes (58) are formed of a composite material.

5. The vane system of claim 1, wherein each vane (58) has a same cross-sectional shape, and wherein each opening (84) and the ledge (88) combine to form the same cross-sectional shape as each vane.

6. A gas turbine engine, comprising:
a fan blade stage (12); and
a bypass vane stage (50) disposed proximate to the fan blade stage (12) and operative to direct air to or from the fan blade stage (12), wherein the bypass vane stage (50) includes:
the vane system of claim 1; and
a plurality of said vane platform segments (62); wherein the plurality of vane platform segments are configured to jointly form a ring to form at least part of the bypass vane stage (50) in conjunction with the vanes (58) positioned by the openings (84).

7. The gas turbine engine of claim 6, wherein each vane platform segment (62) includes at least two of the openings (84).

8. The gas turbine engine of claim 6, wherein each vane platform segment (62) includes at least three of the openings (84).

9. The gas turbine engine of claim 6 through 8, wherein each vane (58) includes an extension (78) configured to be received in one of the openings (84).

10. The gas turbine engine of claim 9, wherein the extension (78) includes the lip (80) configured to retain the vane (58) with one of the vane platform segments (62).

11. The gas turbine engine of claim 9, wherein the extension (78) has an airfoil shape, and wherein each opening (84) has the same airfoil shape as the extension.

12. A method of manufacturing a bypass vane stage, comprising:
molding a plurality of composite vanes (58), each vane being defined by the same dimensions and having a lip (80) extending therefrom;
forming a plurality of composite vane platform segments (62; 64) configured to jointly form a ring;
forming a plurality of openings (84; 86) in the plurality of composite vane platform segments, wherein each vane platform segment includes at least one opening (84; 86); and wherein each opening is formed to receive a portion (70; 74) of one of the vanes (58) and to position the one of the vanes (58) within the bypass vane stage (50); and wherein at least some of the openings are formed to vary in position relative to others of the openings; and
forming a ledge (88) in at least one of the plurality of openings (84) wherein,
when each vane is received in a corresponding one of the openings (84), a bottom surface of the lip of such vane rests on the ledge disposed in the corresponding one of the openings (84); and
a top surface of the lip opposite the bottom surface of the lip does not extend outwardly beyond a top surface of the vane platform segment (62);

13. The method of claim 12, wherein the at least some of the openings (84; 86) are formed to vary in one or more of an axial direction, a circumferential direction and a setting angle direction relative to the others of the openings.

14. The method of claim 12, further comprising: forming an extension (78) in each vane (58) configured to be received in one of the openings (84); and forming a lip (80) on the extension, wherein the lip is configured to retain the vane with one of the vane platform segments (62).

15. The method of claim 12, further comprising:
inserting one of the vanes (58) into one of the openings (84; 86);
fastening the vane to one of the vane platform segments (62; 64) using a paste adhesive; and
fastening a strap (66; 68) to the vane platform segment and an extension (80; 82) of the vane using the paste adhesive.

## Patentansprüche

1. Bypassschaufelsystem für einen Gasturbinenmotor, umfassend:
eine Vielzahl von Schaufeln (58), wobei jede Schaufel durch dieselben Abmessungen definiert wird, wobei jede Schaufel einen ersten Abschnitt (72) und einen zweiten Abschnitt (74) aufweist;
eine erste umlaufende Schaufelplattform (54) mit einer Vielzahl von Öffnungen (84), die in der Zahl der Vielzahl von Schaufeln entsprechen, wobei jede Öffnung konfiguriert wird, um den ersten Abschnitt einer der Schaufeln aufzunehmen, wobei die erste umlaufende Schaufelplattform ein Schaufelplattformsegment (62) aufweist, das mindestens eine der Vielzahl von Öffnungen definiert; und
eine von der ersten umlaufenden Schaufelplattform radial mit Abstand angeordnete zweite umlaufende Schaufelplattform (56), wobei die zweite umlaufende Schaufelplattform konfiguriert wird, um den zweiten Abschnitt jeder der Schaufeln zu tragen, wobei ein Teil der Vielzahl von Öffnungen in der Position bezogen auf andere der Vielzahl von Öffnungen variiert; wobei der erste Abschnitt jeder Schaufel eine Kante (80) aufweist, die sich davon ausdehnt; und
eine in jeder Öffnung angeordnete Leiste (88); wobei, wenn jede Schaufel in einer entsprechenden der Öffnungen aufgenommen wird, eine Unterseite der Kante einer solchen Schaufel auf der in der entsprechenden der Öffnungen angeordneten Leiste aufliegt, und eine der Unterseite der Kante gegenüberliegende Oberseite der Kante sich nicht auswärts über eine Oberseite des Schaufelplattformsegments hinaus ausdehnt.

2. Schaufelsystem nach Anspruch 1, wobei:
(i) ein Teil der Vielzahl von Öffnungen (84) in einer Axialrichtung bezogen auf die anderen der Vielzahl von Öffnungen variiert; oder
(ii) ein Teil der Vielzahl von Öffnungen (84) in einer Umfangsrichtung bezogen auf die anderen der Vielzahl von Öffnungen variiert; oder
(iii) ein Teil der Vielzahl von Öffnungen (84) in einer Einstellwinkelrichtung bezogen auf die anderen der Vielzahl von Öffnungen variiert; oder
(iv) ein Teil der Vielzahl von Öffnungen (84) in einer Umfangsrichtung bezogen auf die anderen der Vielzahl von Öffnungen zyklisch variiert; oder
(v) die erste umlaufende Schaufelplattform (54) ein Ring ist, der aus einer Vielzahl der Plattformsegmente (62) gebildet wird, wobei jedes Segment eine der Öffnungen (84) aufweist; oder
(vi) die erste umlaufende Schaufelplattform (54) ein Ring ist, der aus einer Vielzahl der Plattformsegmente (62) gebildet wird, wobei jedes Segment zwei der Öffnungen (84) aufweist.

3. Schaufelsystem nach Anspruch 1, wobei die erste umlaufende Schaufelplattform (54) ein Ring ist, der aus einer Vielzahl der Plattformsegmente (62) gebildet wird, wobei jedes Segment drei der Öffnungen (84) aufweist.

4. Schaufelsystem nach Anspruch 1, wobei die Vielzahl von Schaufeln (58) aus einem Verbundwerkstoff gebildet werden.

5. Schaufelsystem nach Anspruch 1, wobei jede Schaufel (58) eine selbe Querschnittsform aufweist, und wobei jede Öffnung (84) und die Leiste (88) sich verbinden, um dieselbe Querschnittsform wie jede Schaufel zu bilden.

6. Gasturbinenmotor, umfassend:
eine Lüfterschaufelstufe (12); und
eine Bypassschaufelstufe (50), die nahe der Lüfterschaufelstufe (12) angeordnet wird und Luft zu oder von der Lüfterschaufelstufe (12) leitet, wobei die Bypassschaufelstufe (50) aufweist:
das Schaufelsystem nach Anspruch 1; und
eine Vielzahl der Schaufelplattformsegmente (62); wobei die Vielzahl von Schaufelplattformsegmenten konfiguriert werden, um gemeinsam einen Ring zu bilden, um mindestens einen Teil der Bypassschaufelstufe (50) in Verbindung mit den Schaufeln (58) zu bilden, die durch die Öffnungen (84) positioniert werden.

7. Gasturbinenmotor nach Anspruch 6, wobei jedes Schaufelplattformsegment (62) mindestens zwei der Öffnungen (84) aufweist.

8. Gasturbinenmotor nach Anspruch 6, wobei jedes Schaufelplattformsegment (62) mindestens drei der Öffnungen (84) aufweist.

9. Gasturbinenmotor nach Anspruch 6 bis 8, wobei jede Schaufel (58) eine Verlängerung (78) aufweist, die konfiguriert wird, um in einer der Öffnungen (84) aufgenommen zu werden.

10. Gasturbinenmotor nach Anspruch 9, wobei die Verlängerung (78) die Kante (80) aufweist, die konfiguriert wird, um die Schaufel (58) mit einem der Schaufelplattformsegmente (62) zu halten.

11. Gasturbinenmotor nach Anspruch 9, wobei die Verlängerung (78) eine Tragflächenform aufweist, und wobei jede Öffnung (84) dieselbe Tragflächenform wie die Verlängerung aufweist.

12. Verfahren zum Herstellen einer Bypassschaufelstufe, umfassend:
ein Formen einer Vielzahl von Verbundwerkstoffschaufeln (58), wobei jede Schaufel durch dieselben Abmessungen definiert wird und eine Kante (80) aufweist, die sich davon ausdehnt;
ein Bilden einer Vielzahl von Schaufelplattformsegmente (62; 64) aus Verbundwerkstoff, die konfiguriert werden, gemeinsam einen Ring zu bilden;
ein Bilden einer Vielzahl von Öffnungen (84; 86) in der Vielzahl von Schaufelplattformsegmenten aus Verbundwerkstoff,
wobei jedes Schaufelplattformsegment mindestens eine Öffnung (84; 86) aufweist; und wobei jede Öffnung gebildet wird, um einen Abschnitt (70; 74) einer der Schaufeln (58) aufzunehmen und die eine der Schaufeln (58) innerhalb der Bypassschaufelstufe (50) zu positionieren; und
wobei mindestens ein Teil der Öffnungen gebildet wird, um in einer Position bezogen auf andere der Öffnungen zu variieren; und
ein Bilden einer Leiste (88) in mindestens einer der Vielzahl von Öffnungen (84), wobei,
wenn jede Schaufel in einer entsprechenden der Öffnungen (84) aufgenommen wird, eine Unterseite der Kante einer solchen Schaufel auf der in der entsprechenden der Öffnungen (84) angeordneten Leiste aufliegt; und
eine der Unterseite der Kante gegenüberliegende Oberseite der Kante sich nicht auswärts über eine Oberseite des Schaufelplattformsegments (62) hinaus ausdehnt.

13. Verfahren nach Anspruch 12, wobei mindestens ein Teil der Öffnungen (84, 86) gebildet wird, in einer oder mehreren einer Axialrichtung, einer Umfangsrichtung und einer Einstellwinkelrichtung bezogen auf die anderen der Öffnungen zu variieren.

14. Verfahren nach Anspruch 12, das des Weiteren umfasst:
ein Bilden einer Verlängerung (78) in jeder Schaufel (58), die konfiguriert wird, um in einer der Öffnungen (84) aufgenommen zu werden; und
ein Bilden einer Kante (80) auf der Verlängerung, wobei die Kante konfiguriert wird, die Schaufelplattformsegmente (62) zu halten.

15. Verfahren nach Anspruch 12, das des Weiteren umfasst:
ein Einsetzen einer der Schaufeln (58) in eine der Öffnungen (84; 86);
ein Befestigen der Schaufelplattformsegmente (62; 64) durch Verwenden einer Klebstoffpaste; und
ein Befestigen eines Riemens (66; 68) an das Schaufelplattformsegment und eine Verlängerung (80; 82) der Schaufel durch Verwenden der Klebstoffpaste.

## Revendications

1. Système d'aubage de dérivation pour un moteur à turbine à gaz, comprenant :
une pluralité d'aubes (58), chaque aube étant définie par les mêmes dimensions, dans lequel chaque aube comprend une première partie (72) et une deuxième partie (74) ;
une première plateforme d'aube circonférentielle (54) présentant une pluralité d'ouvertures (84) dont le nombre correspond à la pluralité d'aubes, dans lequel chaque ouverture est configurée pour accueillir la première partie de l'une des aubes, la première plateforme d'aube circonférentielle comprenant un segment de plateforme d'aube (62) définissant au moins une parmi ladite pluralité d'ouvertures ; et
une deuxième plateforme d'aube circonférentielle (56) espacée radialement par rapport à la première plateforme d'aube circonférentielle, où la deuxième plateforme d'aube circonférentielle est configurée pour supporter la deuxième partie de chacune des aubes, où la position de certaines parmi la pluralité d'ouvertures varie par rapport à d'autres ouvertures parmi la pluralité d'ouvertures ;
la première partie de chaque aube comprend une lèvre (80) s'étendant à partir de celle-ci ; et
un rebord (88) fourni dans chaque ouverture ;
dans lequel, lorsque chaque aube est accueillie dans une ouverture correspondante parmi les ouvertures, une surface inférieure de la lèvre de ladite aube repose sur le rebord fourni dans l'ouverture correspondante parmi les ouvertures, et une surface supérieure de la lèvre opposée à la surface inférieure de la lèvre ne s'étend pas vers l'extérieur au-delà d'une surface supérieure du segment de plateforme d'aube.

2. Système d'aubage selon la revendication 1, dans lequel :
(i) une direction axiale des certaines ouvertures parmi la pluralité d'ouvertures (84) varie par rapport aux autres ouvertures parmi la pluralité d'ouvertures ; ou
(ii) une direction circonférentielle des certaines ouvertures parmi la pluralité d'ouvertures (84) varie par rapport aux autres ouvertures parmi la pluralité d'ouvertures ; ou
(iii) une direction d'angle de calage des certaines ouvertures parmi la pluralité d'ouvertures (84) varie par rapport aux autres ouvertures parmi la pluralité d'ouvertures ; ou
(iv) une direction circonférentielle des certaines ouvertures parmi la pluralité d'ouvertures (84) varie de manière cyclique par rapport aux autres ouvertures parmi la pluralité d'ouvertures ; ou
(v) la première plateforme d'aube circonférentielle (54) est un anneau formé d'une pluralité desdits segments de plateforme (62), chaque segment comprenant une des ouvertures (84) ; ou
(vi) la première plateforme d'aube circonférentielle (54) est un anneau formé d'une pluralité desdits segments de plateforme (62), chaque segment comprenant deux des ouvertures (84).

3. Système d'aubage selon la revendication 1, dans lequel la première plateforme d'aube circonférentielle (54) est un anneau formé d'une pluralité desdits segments de plateforme (62), chaque segment comprenant trois des ouvertures (84).

4. Système d'aubage selon la revendication 1, dans lequel la pluralité d'aubes (58) sont formées d'un matériau composite.

5. Système d'aubage selon la revendication 1, dans lequel chaque aube (58) présente une forme transversale identique, et dans lequel chaque ouverture (84) et le rebord (88) se combinent pour former la même forme transversale que celle de ladite aube respective.

6. Moteur à turbine à gaz, comprenant :
un étage de pales de soufflante (12) ; et
un étage d'aubage de dérivation (50) fourni à proximité de l'étage de pales de soufflante (12) et servant à diriger de l'air vers ou à partir de l'étage de pales de soufflante (12), dans lequel l'étage d'aubage de dérivation (50) comprend :
le système d'aubage selon la revendication 1 ; et
une pluralité desdits segments de plateforme d'aube (62) ; dans lequel la pluralité de segments de plateforme d'aube sont configurés pour former conjointement un anneau de manière à former au moins une partie de l'étage d'aubage de dérivation (50) conjointement aux aubes (58) positionnées grâce aux ouvertures (84).

7. Moteur à turbine à gaz selon la revendication 6, dans lequel chaque segment de plateforme d'aube (62) comprend au moins deux des ouvertures (84).

8. Moteur à turbine à gaz selon la revendication 6, dans lequel chaque segment de plateforme d'aube (62) comprend au moins trois des ouvertures (84).

9. Moteur à turbine à gaz selon l'une quelconque des revendications 6 à 8, dans lequel chaque aube (58) comprend une extension (78) configurée pour être accueillie dans l'une des ouvertures (84).

10. Moteur à turbine à gaz selon la revendication 9, dans lequel l'extension (78) comprend la lèvre (80) configurée pour retenir l'aube (58) avec l'un des segments de plateforme d'aube (62).

11. Moteur à turbine à gaz selon la revendication 9, dans lequel l'extension (78) présente un profil aérodynamique, et dans lequel chaque ouverture (84) présente le même profil aérodynamique que l'extension.

12. Procédé de fabrication d'un étage d'aubage de dérivation, comprenant les étapes consistant à :
mouler une pluralité d'aubes composites (58), chaque aube étant définie par les mêmes dimensions et présentant une lèvre (80) s'étendant à partir de celle-ci ;
former une pluralité de segments de plateforme d'aube composites (62 ; 64) configurés pour former conjointement un anneau ;
former une pluralité d'ouvertures (84 ; 86) dans la pluralité de segments de plateforme d'aube composites, dans lequel chaque segment de plateforme d'aube comprend au moins une ouverture (84 ; 86) ; et dans lequel chaque ouverture est formée de manière à accueillir une partie (70 ; 74) de l'une des aubes (58) et à positionner l'une des aubes (58) au sein de l'étage d'aubage de dérivation (50) ; et dans lequel au moins certaines des ouvertures sont formées de manière à ce que leur position varie par rapport à d'autres ouvertures parmi les ouvertures ; et
former un rebord (88) dans au moins une parmi la pluralité d'ouvertures (84), dans lequel,
lorsque chaque aube est accueillie dans une ouverture correspondante parmi les ouvertures (84), une surface inférieure de la lèvre de ladite aube repose sur le rebord fourni dans l'ouverture correspondante parmi les ouvertures (84) ; et
une surface supérieure de la lèvre opposée à la surface inférieure de la lèvre ne s'étend pas vers l'extérieur au-delà d'une surface supérieure du segment de plateforme d'aube (62) ;

13. Procédé selon la revendication 12, dans lequel au moins certaines ouvertures (84 ; 86) sont formées de manière à ce qu'une ou plusieurs parmi une direction axiale, une direction circonférentielle et une direction d'angle de calage varie par rapport aux autres ouvertures parmi les ouvertures.

14. Procédé selon la revendication 12, comprenant en outre les étapes consistant à :
former une extension (78) dans chaque aube (58) configurée pour être accueillie dans une des ouvertures (84) ; et
former une lèvre (80) sur l'extension, la lèvre étant configurée pour retenir l'aube avec un des segments de plateforme d'aube (62).

15. Procédé selon la revendication 12, comprenant en outre les étapes consistant à :
insérer l'une des aubes (58) dans l'une des ouvertures (84 ; 86) ;
fixer l'aube sur l'un des segments de plateforme d'aube (62 ; 64) en utilisant un adhésif en pâte ; et
fixer un feuillard (66 ; 68) sur le segment de plateforme d'aube et une extension (80 ; 82) de l'aube en utilisant l'adhésif en pâte.
